(19) Europäisches Patentamt
European Patent Office
Office européen des brevets

(11) **EP 3 085 546 B1**

(12) **EUROPEAN PATENT SPECIFICATION**

(45) Date of publication and mention
of the grant of the patent:
**10.10.2018 Bulletin 2018/41**

(21) Application number: **14872194.7**

(22) Date of filing: **19.11.2014**

(51) Int Cl.:
**B41M 5/00** (2006.01)    **B32B 15/08** (2006.01)
**B32B 18/00** (2006.01)    **B41M 5/50** (2006.01)
**B41M 5/52** (2006.01)    **C09D 11/101** (2014.01)
**C04B 41/52** (2006.01)

(86) International application number:
**PCT/JP2014/005826**

(87) International publication number:
**WO 2015/092976 (25.06.2015 Gazette 2015/25)**

(54) **PRINTING MATERIAL**

DRUCKMATERIAL

MATÉRIAU D'IMPRESSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.12.2013 JP 2013261240**

(43) Date of publication of application:
**26.10.2016 Bulletin 2016/43**

(73) Proprietor: **Nisshin Steel Co., Ltd.
Chiyoda-ku
Tokyo 100-8366 (JP)**

(72) Inventors:
• **SATOU, Masaki**
**Tokyo 100-8366 (JP)**
• **SUZUKI, Seiju**
**Tokyo 100-8366 (JP)**
• **HIRAKU, Masaru**
**Tokyo 100-8366 (JP)**
• **SUGITA, Shuichi**
**Tokyo 100-8366 (JP)**
• **NAKAGAWA, Akira**
**Aichi, 470-0213 (JP)**

(74) Representative: **Epping - Hermann - Fischer
Patentanwaltsgesellschaft mbH
Schloßschmidstraße 5
80639 München (DE)**

(56) References cited:
JP-A- 2009 102 535    JP-A- 2010 013 557
JP-A- 2010 506 964    JP-A- 2011 153 255
JP-A- 2011 515 250

## Description

Technical Field

The present invention relates to a printed material including an ink layer excellent in adhesion to an ink-receiving layer formed of a cured product of a resin composition.

Background Art

Conventionally, printed materials have been often used as interior materials and exterior wall materials of buildings. A printed material can be manufactured by forming a desired pattern by ink-jet printing or the like on the surface of a base material processed in a desired shape. When a printed material (an interior material or an exterior wall material) is to be manufactured by ink-jet printing, for example, weather resistance, scratch resistance and adhesion of ink on the surface of the base material are important factors.

A printed material has, for example, a metal plate, an ink-receiving layer disposed on the surface of the metal plate and an ink layer disposed on the surface of the ink-receiving layer. Such a printed material is manufactured by ink-jet printing cationic actinic radiation-curable ink on the surface of a metal plate including an ink-receiving layer disposed on the surface and thereafter irradiating with actinic radiation (e.g., ultraviolet ray) to cure the actinic radiation-curable ink.

PTLS 1 and 2 each disclose a cationic actinic radiation-curable ink containing a cationically-reactive compound, an epoxy group-containing silane coupling agent and a cationic photopolymerization initiator. The cationic actinic radiation-curable ink described in PTLS 1 and 2 which has been applied on the surface of a resin, glass or the like is cured into a coating film by irradiation with actinic radiation. Coating films formed with use of the cationic actinic radiation-curable ink described in PTLS 1 and 2 are excellent in weather resistance and adhesion due to having siloxane bonds derived from the epoxy group-containing silane coupling agent.

PTL 3 discloses a cationic actinic radiation-curable ink containing a cationically-reactive compound having two or more cyclic structures selected from the group consisting of epoxy rings, oxetane rings and 5-membered carbonates; a silane coupling agent; and a curing agent for the cationically-reactive compound. The cationic actinic radiation-curable ink described in PTL 3 which has been applied on a base material is cured into a coating film by irradiation with actinic radiation. Hydroxyl groups derived from the cationically-reactive compound undergo alcohol reaction with silyl groups or silanol groups of the silane coupling agent and as a result the cationic actinic radiation-curable ink is three-dimensionally crosslinked to transform into a coating film excellent in weather resistance.

As described, the cationic actinic radiation-curable inks described in PTLS 1 to 3 transform into a coating film excellent in weather resistance and adhesion due to containing a silane coupling agent. PTL 4 discloses a radiation curable ink composition including a photoinitiator system, an acrylate ester of a carboxylic acid, and at least one radiation curable material.

Citation List

Patent Literature

PTL 1
Japanese Patent Application Laid-Open No. 2011-153255
PTL 2
Japanese Patent Application Laid-Open No. 2007-002130
PTL 3
Japanese Patent Application Laid-Open No. 2012-025125
PTL 4
WO 2008/045480 A

Summary of Invention

Technical Problem

However, the cationic actinic radiation-curable inks containing a silane coupling agent described in PTLS 1 to 3 occasionally cause the formation of siloxane bonds within the silane coupling agent to increase the crosslinking density. This involves the shrinkage of a cured product of the cationic actinic radiation-curable ink (hereinafter, referred to as "ink layer") and leads to a problem of the deterioration of the adhesion between a base material and the cured product.

In some cases, a resin composition containing a polyester and a melamine resin, or containing a polyester and a urethane resin, or containing a polyester, a melamine resin and a urethane resin is applied on the surface of the base material of the above-described printed material, and cured to form an ink-receiving layer. When the cationic actinic radiation-curable ink described in PTLS 1 to 3 is ink-jet printed on this ink-receiving layer, the cationic actinic radiation-curable ink cannot penetrate to the inside of the ink-receiving layer due to the high crosslinking density of the ink-receiving layer and the adhesion of the ink layer to the base material may be degraded.

An object of the present invention is to provide a printed material which has weather resistance and scratch resistance and in which the cured product of a cationic actinic radiation-curable ink (ink layer) is excellent in adhesion to the ink-receiving layer. Solution to Problem

The inventors have found that the above problem can be solved by manufacturing a printed material with use of a cationic actinic radiation-curable ink blended with a cationically-polymerizable compound, a predetermined amount of an epoxy group-containing silane coupling agent, a predetermined amount of a hydroxyl group-containing oxetane compound and a photopolymerization initiator, and have conducted further studies to accomplish the present invention.

The present invention relates to the following printed materials.

[1] A printed material comprising: a base material being a metallic base material or a ceramic base material; an ink-receiving layer disposed on the base material and formed of a cured product of a resin composition; and an ink layer disposed on the ink-receiving layer and formed of a cured product of a cationic actinic radiation-curable ink, wherein: the cationic actinic radiation-curable ink contains a cationically-polymerizable compound, an epoxy group-containing silane coupling agent, a hydroxyl group-containing oxetane compound and a photopolymerization initiator, a content of the epoxy group-containing silane coupling agent in the cationic actinic radiation-curable ink is in a range of 0.5 to 10.0 mass%, and a content of the hydroxyl group-containing oxetane compound in the cationic actinic radiation-curable ink is in a range of 10 to 50 mass%.

[2] The printed material according to [1], wherein the ink-receiving layer is impenetrable to the cationic actinic radiation-curable ink.

[3] The printed material according to [1] or [2], wherein a surface of the ink-receiving layer has an arithmetic average roughness Ra in a range of 400 to 3,000 nm as measured in accordance with JIS B 0601.

[4] The printed material according to any one of [1] to [3], wherein the resin composition contains a polyester and a melamine resin, or contains a polyester and a urethane resin, or contains a polyester, a melamine resin and a urethane resin.

[5] The printed material according to any one of [1] to [4], wherein the hydroxyl group-containing oxetane compound is 3-ethyl-3-hydroxymethyloxetane.

Advantageous Effects of Invention

According to the present invention, a printed material which has weather resistance and scratch resistance and in which the ink layer is excellent in adhesion to the ink-receiving layer can be provided.

Brief Description of Drawings

FIG. 1 is a schematic sectional view illustrating an ink-receiving layer; and
FIG. 2 is a structural drawing schematically illustrating a crosslinked siloxane oligomer.

Description of Embodiments

1. Printed Material

A printed material according to the present invention includes a base material, an ink-receiving layer disposed on the base material and an ink layer disposed on the ink-receiving layer. The printed material according to the present invention may further include an overcoat layer disposed on the ink layer. The printed material according to the present invention is suitable for a building material used as an interior material or an exterior wall material of a building, for example. In the following, components of the printed material according to the present invention will be described.

(Base Material)

Examples of the metallic base material include plated steel sheets such as hot-dip Zn-55%Al alloy-plated steel sheets, steel sheets such as normal steel sheets and stainless-steel sheets, aluminum plates and copper plates. A tile-like, brick-like, or grain-like irregularities and the like may be provided to the metallic base materials by performing embossing, drawing and the like on the materials. Further, for the purpose of improving the heat insulating property and the soundproofness, it is also possible to cover the rear surface of the metallic base material with a foamed resin, aluminum laminate kraft paper whose core material is an inorganic material such as a gypsum board, or the like.

Examples of the ceramic base material include unglazed ceramic boards, glazed-and-baked ceramic boards, cement plates, and plate materials formed by using cementitious raw materials, fibrous raw materials and the like. Similarly, a tile-like, brick-like, or grain-like irregularities and the like may be provided to the surface of the ceramic base materials.

A chemical conversion film, an undercoating film, and the like may be formed on the surface of the base material. The chemical conversion film is formed on the entire surface of the base material and improves corrosion resistance and adhesion of the coating film. The type of the chemical conversion treatment for forming the chemical conversion film is not particularly limited. Examples of the chemical conversion treatment include chromate treatment, chromium free treatment, and phosphate treatment. The deposition amount of the chemical conversion film is not particularly limited as long as the amount falls within a range that is effective for improving corrosion resistance and adhesion of the coating film. For example, in the case of a chromate film, it suffices to adjust the deposition amount so that the deposition amount is 5 to 100 mg/m$^2$ in terms of total Cr. In addition, in the case of a chromium free film, it suffices to adjust the deposition amount so that the deposition amount is 10 to 500 mg/m$^2$ for the Ti-Mo composite film, and to 3 to 100 mg/m$^2$ in terms of fluorine or total metallic element for the fluoroacid type film. In addition, in the case of a phosphate film, it suffices to adjust the deposition amount so that the deposition amount is 5 to 500 mg/m$^2$.

The undercoating film is formed on the entire surface of the base material or the chemical conversion film and improves corrosion resistance and adhesion of the coating film. The undercoating film is formed, for example, by applying a resin-containing undercoating onto the surface of the base material or the chemical conversion film, and drying (or curing) the undercoating. The type of the resin contained in the undercoating is not particularly limited. Examples of the resin include polyesters, epoxy resins, and acrylic resins. Epoxy resins are preferable for their high polarity and favorable adhesion. The thickness of the undercoating film is not particularly limited as long as the above-mentioned function can be achieved. The thickness of the undercoating film is approximately 5 μm, for example.

(Ink Receiving Layer)

The ink-receiving layer is a layer provided on the entire surface of the base material or the undercoating film and receives cationic actinic radiation-curable ink. The ink-receiving layer includes a resin serving as a matrix.

The type of the resin serving as a matrix is not particularly limited. Examples of the resin serving as a matrix include polyesters, acrylic resins, poly(vinylidene fluoride), polyurethanes, epoxy resins, polyvinyl alcohols, and phenol resins. From the standpoint of high weather resistance and adhesion with cationic actinic radiation-curable ink, the resin serving as a matrix preferably contains a polyester. Preferably, the resin serving as a matrix is not a resin that forms a porous ink-receiving layer for water-based ink. The reason is that a porous ink-receiving layer may be poor in moisture resistance and weather resistance, and may not be suitable for a building material or the like.

The polyester resin composition for forming a matrix contains, for example, a polyester and a melamine resin, or contains a polyester and a urethane resin, or contains a polyester, a melamine resin and a urethane resin. The polyester resin composition containing a polyester and a melamine resin further contains a catalyst and an amine. A cured product of such a resin composition (ink-receiving layer) has a high crosslinking density and is impenetrable to cationic actinic radiation-curable ink. The impenetrability of the ink-receiving layer (a cured product of a resin composition) to cationic actinic radiation-curable ink can be confirmed by observing the cross-section of the ink-receiving layer and the ink layer with a microscope at a magnification of 100 to 200 times. In the case that the ink-receiving layer is impenetrable, the interface between the ink-receiving layer and the ink layer can be clearly identified; however, in the case that the ink-receiving layer is penetrable, the interface is unclear and difficult to identify.

The type of the polyester is not particularly limited as long as it can undergo crosslinking reaction with a melamine resin, a urethane resin or a combination thereof. Preferably, the number-average molecular weight of the polyester is, but not particularly limited to, 5,000 or greater from the standpoint of processability. In addition, preferably, the hydroxyl value of the polyester is, but not particularly limited to, 40 mgKOH/g or lower. Preferably, the glass transition point of the polyester is, but not particularly limited to, 0 to 70°C. When the glass transition point is lower than 0°C, the hardness of the ink-receiving layer may be insufficient. On the other hand, when the glass transition point is higher than 70°C, processability may be lowered.

The melamine resin is a crosslinking agent for the polyester. Preferably, the type of the melamine resin is, but not particularly limited to, a methylated melamine resin. Preferably, in the methylated melamine resin, the proportion of methoxy groups in the functional groups in the molecule is 80mol% or greater. The methylated melamine resin may be used alone or in combination with other melamine resins. Preferably, the amount of the melamine resin to be blended is within a ratio of polyester to melamine resin being 60:40 to 80:20 by mass.

The catalyst promotes the reaction of the melamine resin. Examples of the catalyst include dodecylbenzenesulfonic acid, paratoluenesulfonic acid, and benzenesulfonic acid. Preferably, the amount of the catalyst to be blended is approximately 0.1 to 8.0% with respect to the resin solid content.

The amine neutralizes the catalyst reaction. Examples of the amine include triethylamine, dimethylethanolamine, dimethylaminoethanol, monoethanolamine, and isopropanolamine. Preferably, the amount of the amine to be blended is, but not particularly limited to, 50% or greater of the equivalent of the acid (catalyst).

The urethane resin is a crosslinking agent for the polyester. The type of the urethane resin is preferably, but not particularly limited to, made from not aromatic diisocyanate but from aliphatic diisocyanate or alicyclic diisocyanate from the standpoint of enhancing weather resistance. Examples of the aliphatic diisocyanate and the alicyclic diisocyanate include hexamethylene diisocyanate, isophorone diisocyanate and 1,3-bis(isocyanomethyl)cyclohexane. The urethane resin may be used alone or in combination with other urethane resins. Preferably, the amount of the urethane resin to be blended is within a ratio of polyester to urethane resin being 60:40 to 80:20 by mass.

The arithmetic average roughness Ra of the ink-receiving layer measured in accordance with JIS B 0601 preferably falls within the range of 400 to 3,000 nm. With a measurement method in accordance with JIS B 0601, arithmetic average roughness Ra relating to relatively large irregularity on the surface of the ink-receiving layer can be measured. According to a preliminary experiment conducted by the present inventors, the greater the value of Ra, the more favorable spreadability of the cationic actinic radiation-curable ink is achieved. From the standpoint of the spreadability and color development of the cationic actinic radiation-curable ink, the arithmetic average roughness Ra preferably falls within the range of 400 to 3,000 nm, more preferably, within the range of 500 to 2,000 nm. When the arithmetic average roughness Ra is smaller than 400 nm, spreading of the cationic actinic radiation-curable ink on the surface of the ink-receiving layer is not sufficiently ensured. When the arithmetic average roughness Ra is greater than 3,000 nm, the cationic actinic radiation-curable ink intrudes into deep grooves on the surface of the ink-receiving layer, and consequently color is weakened. It is to be noted that when the arithmetic average roughness Ra is greater than 2,000 nm, the spreadability is saturated.

Here, arithmetic average roughness Ra is measured as follows: a roughness curve is represented by y=f(x); from the roughness curve a portion is extracted in a length for measurement L in the direction of the average line; set the direction of the average line of the extracted portion to be X axis and the direction of the vertical magnification to be Y axis; and a numerical value Ra (unit: nm) is obtained by using the following equation (1):
[1]

$$Ra = \frac{1}{L} \int_0^L |f(x)| dx \qquad \text{(Equation 1)}$$

f(x) can be measured by various means such as a stylus-type surface roughness meter gauge and a scanning tunneling microscope (STM). As described in the following Examples, arithmetic average roughness Ra described herein is a numerical value obtained by a stylus-type surface roughness meter gauge.

The method of forming minute irregularity that satisfies the above-described conditions of arithmetic average roughness Ra on the surface of the ink-receiving layer is not particularly limited. Examples of the method include nanoimprinting method, and shot peening method.

In the nanoimprinting method, a mold provided with a texture (irregularity) that satisfies the arithmetic average roughness Ra, and an ink-receiving layer that is formed on the base material are brought into pressure contact with each other under heating. The mold used in the nanoimprinting method may be manufactured by utilizing known direct-plate making or electronic engraving plate making.

When forming irregularity on the surface of the ink-receiving layer with use of a mold formed in the above-mentioned manner, the base material on which the ink-receiving layer is formed may be pressed against the mold, or the mold may be pressed against the base material on which the ink-receiving layer is formed. In addition, the mold may be pressed against the base material on which the ink-receiving layer is formed with use of a step-and-repeat method in which pressing of the mold and sending out of the base material are alternately performed, or a continuous roll press method using a texture roll. The continuous roll press method is suitable for mass-production since the method can form minute irregularity on the surface of the ink-receiving layer with high speed and favorable reproducibility.

In the shot peening method, an oxide-based abrasive is used. With the shot peening method, a predetermined irregularity can be formed on the surface of the ink-receiving layer by appropriately adjusting the particle diameter of the abrasive, the speed of the shot particle, the peening time and the like.

Further, irregularity may be formed on the surface of the ink-receiving layer also by a method in which a pigment whose particle diameter and amount to be blended are properly adjusted is added to the polyester resin composition for forming the matrix. The "pigment" as used herein includes at least extender pigment (including beads) and coloring pigment. In this case, the proportion of pigment in the ink-receiving layer preferably falls within the range of 50 to 75 mass%. When the proportion of pigment is lower than 50 mass%, the cationic actinic radiation-curable ink may not adhere to the ink-receiving layer. When the proportion of pigment is greater than 75 mass%, the amount of the resin component becomes small, and the ink-receiving layer may be peeled off when the ink-receiving layer is scratched. In addition, processability may be degraded, and cracking of the coating film and decrease in moisture resistance may be caused. The "proportion of pigment" as used herein is equivalent to the pigment weight concentration (%) of the paint used at the time of forming an ink-receiving layer. The pigment weight concentration (PWC) is calculated based on the following equation (2).

$$\text{Pigment weight concentration } (\%) = \text{Pigment weight } /(\text{Pigment weight } + \text{Resin composition weight}) \times 100 \quad (2)$$

To set arithmetic average roughness Ra to 400 to 3,000 nm, it is preferable that the ink-receiving layer contain pigment having a particle diameter of 4 $\mu$m or larger and that the proportion of the pigment having a particle diameter of 4 $\mu$m or larger in the ink-receiving layer be 10 to 30 mass% of pigment. When the proportion of the pigment having a particle diameter of 4 $\mu$m or larger is lower than 10 mass%, it is difficult to set arithmetic average roughness Ra to 400 nm or greater, and spreading of the cationic actinic radiation-curable ink may not be sufficiently ensured. When the proportion of the pigment having a particle diameter of 4 $\mu$m or larger is higher than 30 mass%, arithmetic average roughness Ra may be excessively increased, and printing density may be reduced due to absorption of the cationic actinic radiation-curable ink.

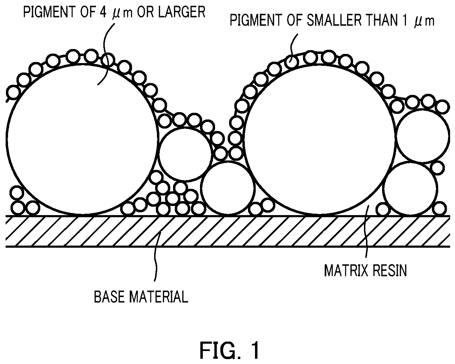

Preferably, the ink-receiving layer contains a combination of pigment having a particle diameter of 4 $\mu$m or larger, and pigment having a particle diameter of smaller than 1 $\mu$m. FIG. 1 is a schematic sectional view of an ink-receiving layer formed in the above-mentioned manner. By blending a combination of pigment having a particle diameter of 4 $\mu$m or larger and pigment having a particle diameter of smaller than 1 $\mu$m in the ink-receiving layer, a state is established in which pigment having a particle diameter of smaller than 1 $\mu$m is dispersed in matrix resin covering pigment having a particle diameter of 4 $\mu$m, as illustrated in FIG. 1. Thus, irregularity having arithmetic average roughness Ra falling within predetermined ranges can be stably formed. It is to be noted that the particle diameter of the pigment is calculated from the particle diameter and the number-based particle size distribution measured using the Coulter counter method.

The type of the extender pigment is not particularly limited. Examples of the extender pigment include silica, calcium carbonate, barium sulfate, aluminum hydroxide, talc, mica, resin beads, and glass beads.

The type of the resin beads is not particularly limited. Examples of the resin beads include acrylic resin beads, polyacrylonitrile beads, polyethylene beads, polypropylene beads, polyester beads, urethane resin beads, and epoxy resin beads. Such resin beads may be produced by using known methods, or may be a commercially available product. Examples of commercially available acrylic resin beads include "TAFTIC AR650S (mean particle diameter: 18 $\mu$m)," "TAFTIC AR650M (mean particle diameter: 30 $\mu$m)," "TAFTIC AR650MX (mean particle diameter: 40 $\mu$m)," "TAFTIC AR650MZ (mean particle diameter: 60 $\mu$m)," "TAFTIC AR650ML (mean particle diameter: 80 $\mu$m)," "TAFTIC AR650L (mean particle diameter: 100 $\mu$m)" and "TAFTIC AR650LL (mean particle diameter: 150 $\mu$m)" that are available from Toyobo Co., Ltd. In addition, examples of commercially available polyacrylonitrile beads include "TAFTIC A-20 (mean particle diameter: 24 $\mu$m)," "TAFTIC YK-30 (mean particle diameter: 33 $\mu$m)," "TAFTIC YK-50 (mean particle diameter: 50 $\mu$m)" and "TAFTIC YK-80 (mean particle diameter: 80 $\mu$m)" that are available from Toyobo Co., Ltd.

The type of the coloring pigment is not particularly limited. Examples of the coloring pigment include carbon black, titanium oxide, iron oxide, yellow iron oxide, phthalocyanine blue, and cobalt blue.

Preferably, the thickness of the ink-receiving layer is, but not particularly limited to, 10 to 40 $\mu$m. When the thickness is smaller than 10 $\mu$m, the durability and hiding property of the ink-receiving layer may be insufficient. When the thickness is greater than 40 $\mu$m, the manufacturing cost may be increased, and blister may easily occur at the time of baking. In addition, the surface of the ink-receiving layer may have orange peel finish so that the external appearance may be degraded.

In addition, from the viewpoint of improving embossing processability and contamination resistance of the base material including the ink-receiving layer, the ink-receiving layer preferably contains, as the pigment having a particle diameter of 4 $\mu$m or larger, 2 to 30 mass% of beads having a particle diameter that falls within 15 to 80 $\mu$m and that is larger than the thickness of the ink-receiving layer. By allowing the beads to protrude from the surface of the ink-receiving layer, the slidability of the ink-receiving layer is improved and embossing processability of the base material including the ink-receiving layer is also significantly improved. In addition, by allowing the beads to protrude from the surface of the ink-receiving layer, the ink-receiving layer becomes stain-proof even when the base material including the ink-receiving layer is overlaid prior to printing. When the proportion of beads having a particle diameter of 15 to 80 μm is lower than 2 mass%, the embossing processability and contamination resistance of the base material including the ink-receiving layer may not be sufficiently improved. In addition, when the particle diameter of the beads is larger than 80 μm, the beads may fall from the coating film, and the embossing processability and the contamination resistance of the base material including the ink-receiving layer may not be sufficiently improved.

In addition, the ink-receiving layer may be blended with wax. Wax can improve lubricity, thereby further improving embossing processability and contamination resistance. In general, however, wax reduces adhesion of the cationic actinic radiation-curable ink, and therefore wax is preferably not blended. In particular, petroleum wax and polyethylene wax melt and spread on the surface of the coating film at the time of baking, thus reducing the adhesion of the cationic actinic radiation-curable ink. In view of this, it is preferable to use PTFE fine powder wax as wax for improving lubricity. PTFE fine powder wax neither melts nor spreads on the surface of the ink-receiving layer at the baking temperature, and therefore does not reduce the adhesion of the cationic actinic radiation-curable ink.

(Ink Layer)

The ink layer is disposed on the ink-receiving layer. The ink layer is disposed on part or the entire surface of the ink-receiving layer so that a desired image is formed on the surface of the ink-receiving layer. The ink layer is formed by applying cationic actinic radiation-curable ink on the surface of the ink-receiving layer by ink-jet printing and curing the applied cationic actinic radiation-curable ink. The cationic actinic radiation-curable ink is preferably cationic UV curable ink, which can be cured when the ink is irradiated with UV ray (actinic radiation).

The cationic actinic radiation-curable ink contains a cationically-polymerizable compound, an epoxy group-containing silane coupling agent, a hydroxyl group-containing oxetane compound and a photopolymerization initiator. The cationic actinic radiation-curable ink may further contain a pigment and a dispersant.

The type of the cationically-polymerizable compound is not particularly limited as long as it is a cationically-polymerizable monomer. Examples of the cationically-polymerizable compound include aromatic epoxides, alicyclic epoxides, aliphatic epoxides and oxetane compounds other than hydroxyl group-containing oxetane compounds. Examples of the aromatic epoxides include di- or poly-glycidyl ethers of bisphenol A or alkylene oxide adduct of bisphenol A, di- or poly-glycidyl ethers of hydrogenated bisphenol A or alkylene oxide adduct of hydrogenated bisphenol A, and novolac epoxy resins. Examples of the alicyclic epoxides include compounds containing cyclohexene oxide or cyclopentene oxide which are obtained by epoxidation of compounds having at least one cycloalkane ring such as a cyclohexene ring and cyclopentene ring, with an oxidant such as hydrogen peroxide or peroxy acid. Examples of the aliphatic epoxides include diglycidyl ethers of alkylene glycols such as diglycidyl ethers of ethylene glycol, diglycidyl ethers of propylene glycol and diglycidyl ether of 1,6-hexanediol; polyglycidyl ethers of polyols such as di- or tri-glycidyl ethers of glycerin or alkylene oxide adduct of glycerin; and diglycidyl ethers of polyalkylene glycol such as diglycidyl ethers of polyethylene glycol or alkylene oxide adduct of polyethylene glycol, and diglycidyl ethers of polypropylene glycol or alkylene oxide adduct of polypropylene glycol. Since oxetane compounds easily undergo growth reaction, the oxetane compound can be cationically polymerized into a polymer with a high molecular weight. Examples of the oxetane compound include known oxetane compounds disclosed in Japanese Patent Application Laid-Open Nos. 2001-220526 and 2001-310937 and the like. In addition, the oxetane compound may be used alone, or a combination of a monofunctional oxetane compound containing one oxetane ring and a multifunctional oxetane compound containing two or more oxetane rings may be used.

The content of the cationically-polymerizable compound in the cationic actinic radiation-curable ink preferably falls within the range of 60 to 95 mass%. When the content of the cationically-polymerizable compound is lower than 60 mass%, the amount of a curing component is too small, and consequently the ink layer may not be formed. When the content of the cationically-polymerizable compound is greater than 95 mass%, the amount of the photopolymerization initiator to be added is too small, and consequently the ink layer may be insufficiently cured.

The epoxy group-containing silane coupling agent forms siloxane bonds with a cationically-polymerizable compound, a hydroxyl group-containing oxetane compound or the like to improve the weather resistance of the ink layer. The type of the epoxy group-containing silane coupling agent is not particularly limited. Examples of the epoxy group-containing silane coupling agent include (3-(2,3epoxypropoxy)propyl)trimethyltrimethoxysilane, 3-glycidoxypropyltrimethoxysilane and epoxy group-containing oligomer silane coupling agents. The epoxy group-containing silane coupling agent may be produced by using known methods, or may be a commercially available product. Examples of commercially available epoxy group-containing silane coupling agents include "KBM-303; 2-(3,4-epoxycyclohexyl)ethyltrimethoxysilane" and "KBM-403; 3-glycidoxypropyltrimethoxysilane" that are available from Shin-Etsu Chemical Co., Ltd. The epoxy group-containing silane coupling agent has epoxy groups, and easily undergoes initiation reaction for cationic polymerization.

The content of the epoxy group-containing silane coupling agent in the cationic actinic radiation-curable ink falls within the range of 0.5 to 10.0 mass%. When the content of the epoxy group-containing silane coupling agent is lower than 0.5 mass%, siloxane bonds may insufficiently form, and consequently the weather resistance may be degraded. When the content of the epoxy group-containing silane coupling agent is greater than 10.0 mass%, self-condensation may be caused, and consequently the adhesion to the ink-receiving layer may be degraded.

The hydroxyl group-containing oxetane compound is a compound having one or more hydroxyl groups in the molecule. The type of the hydroxyl group-containing oxetane compound is not particularly limited. Examples of the hydroxyl group-containing oxetane compound include 3-ethyl-3-hydroxymethyloxetane. The hydroxyl group-containing oxetane compound may be produced by using known methods, or may be a commercially available product. Examples of commercially available hydroxyl group-containing oxetane compounds include "OXT-101; 3-ethyl-3-hydroxymethyloxetane" that is available from Toagosei Co., Ltd. Such hydroxyl group-containing oxetane compounds undergo initiation reaction slowly but undergo polymerization reaction quickly.

The content of the hydroxyl group-containing oxetane compound in the cationic actinic radiation-curable ink falls within the range of 10 to 50 mass%. When the content of the hydroxyl group-containing oxetane compound is lower than 10 mass%, the proportion of the epoxy group-containing silane coupling agent in the cationic actinic radiation-curable ink is high, and consequently the adhesion of the ink layer to the ink-receiving layer may be degraded. When the content of the hydroxyl group-containing oxetane compound is greater than 50 mass%, the cationic actinic radiation-curable ink is not cured due to absorption of moisture in the air, and consequently the surface of the ink layer may be easily scratched.

The photopolymerization initiator allows cationic polymerization to start on being irradiated with actinic radiation. The type of the photopolymerization initiator is, although not particularly limited as long as it can allow cationic polymerization to start on being irradiated with actinic radiation, preferably an onium salt which generates a Lewis acid on being irradiated with actinic radiation. Examples of the photopolymerization initiator include diazonium salts of Lewis acids, iodonium salts of Lewis acids and sulfonium salts of Lewis acids. Each of these onium salts has a cation portion containing an aromatic diazonium, an aromatic iodonium, an aromatic sulfonium or the like and an anion portion containing $BF_4^-$, $PF_6^-$, $SbF_6^-$, $[BX_4]^-$ (X denotes a phenyl group substituted with at least two fluorine atoms or trifluoromethyl groups) or the like. Specific examples of the onium salt include a phenyldiazonium salt of boron tetrafluoride, a diphenyliodonium salt of phosphorus hexafluoride, a diphenyliodonium salt of antimony hexafluoride, a tri-4-methylphenylsulfonium salt of arsenic hexafluoride, a tri-4-methylphenylsulfonium salt of antimony tetrafluoride, a diphenyliodonium salt of tetrakis(pentafluorophenyl)boron, a mixture of an acetylacetone aluminum salt and an orthonitrobenzylsilyl ether, a phenylthiopyridium salt and a phosphorus hexafluoride allene-iron complex.

The content of the photopolymerization initiator in the cationic actinic radiation-curable ink preferably falls within the range of 3 to 15 mass%. When the content of the photopolymerization initiator is lower than 3 mass%, a sufficient degree of polymerization cannot be obtained, and consequently the ink layer may not be formed. When the content of the photopolymerization initiator is greater than 15 mass%, a difference in degree of curing between the surface layer and deep layer of the ink layer increases to generate distortion, and consequently the adhesion may be degraded.

The type of the pigment is not particularly limited as long as the pigment is organic pigment or inorganic pigment. Examples of the organic pigment include nitrosos, dye lakes, azo lakes, insoluble azos, monoazos, disazos, condensed azos, benzimidazolones, phthalocyanines, anthraquinones, perylenes, quinacridones, dioxazines, isoindolines, azomethines and pyrrolopyrroles. In addition, examples of the inorganic pigment include oxides, hydroxides, sulfides, ferrocyanides, chromates, carbonates, silicates, phosphates, carbons (carbon black) and metal powders. Preferably, the amount of the pigment blended in the cationic actinic radiation-curable ink falls within the range of 0.5 to 20 mass%. When the amount of the pigment is lower than 0.5 mass%, coloring may be insufficient, and a desired image may not be formed. When the amount of the pigment is greater than 20 mass%, the viscosity of the cationic actinic radiation-curable ink may be excessively high, and discharging failure of the ink-jet head may be caused.

The dispersant disperses the components of the cationic actinic radiation-curable ink. Either of low-molecular dispersant or polymer dispersant may be used as the dispersant. The dispersant may be produced by using known methods, or may be a commercially available product. Examples of commercially available dispersants include "AJISPER PB822" and "AJISPER PB821" (both available from Ajinomoto Fine-Techno Co., Inc.).

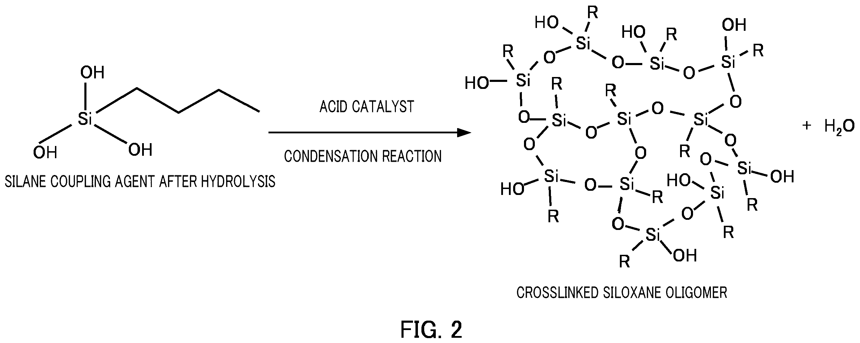

FIG. 2 is a structural drawing schematically illustrating a crosslinked siloxane oligomer. As illustrated in FIG. 2, the silane coupling agent generates a plurality of silanol groups due to the hydrolysis of a plurality of alkoxy groups present on the silicon atoms. The silanol groups form siloxane bonds doubly or triply with a strong acid generated from the photopolymerization initiator as an acid catalyst, and as a result a crosslinked siloxane oligomer is generated. This crosslinked siloxane oligomer has a high cure shrinkage rate and consequently may cause the degradation of the adhesion of the ink layer. Accordingly, it is necessary to inhibit the generation of the crosslinked siloxane oligomer in order to improve the adhesion of the ink layer to the ink-receiving layer.

The present inventors have found that the adhesion of the ink layer can be improved by inhibiting the generation of crosslinked siloxane oligomers due to the three-dimensional crosslinking reaction within the silane coupling agent in accordance with the following (1) to (3).

(1) To the cationic actinic radiation-curable ink is added 10 to 50 mass% of a hydroxyl group-containing oxetane compound capable of reacting with silanol groups in the silane coupling agent.

(2) Cationically-polymerizable epoxy groups are introduced into the molecular structures of the silane coupling agent. As a result, the silane coupling agent is incorporated as a part of a cationically-polymerized polymer chain. This enables to inhibit the generation of crosslinked siloxane oligomers, which would be caused by three-dimensional crosslinking when the silane coupling agent molecules approach to each other via hydrogen bonds.

(3) The content of the epoxy group-containing silane coupling agent is set to 0.5 to 10 mass%, which is lower than that of the hydroxy group-containing oxetane, and epoxy groups, not oxetane rings, are employed for the cationically-polymerizable functional groups to be introduced into the silane coupling agent. In general, epoxy compounds, which are cationically-polymerizable monomers, have a characteristic that the curing reaction initiates quickly but the polymerization rate does not increase so much. On the other hand, oxetane compounds, which are cationically-polymerizable monomers, have a characteristic that the curing initiates slowly but the curing rate increases in a later stage of the reaction and a high polymerization rate is achieved. The distortion and basicity of cyclic ether rings contained in each of the epoxy compound and the oxetane compound account for the difference in cationic polymerization characteristics therebetween. Specifically, the epoxy group and the oxetane group have inverse characteristics: the distortion of the ring in the epoxy group is larger than that of the oxetane ring and the basicity of the oxetane ring is higher than that of the epoxy group.

Even though the epoxy group-containing silane coupling agent is introduced into a polymerization-starting point of a cationically-polymerized polymer as a result of the above (1) to (3), the silane coupling agent is significantly less likely to undergo cationic polymerization sequentially due to the characteristics of the epoxy groups. This is also considered to inhibit the generation of crosslinked siloxane oligomers when the silane coupling agent molecules approach to each other. The case that the amount of the epoxy group-containing silane coupling agent added is greater than 10 mass% is not preferable because the silane coupling agent molecules which have not been introduced into a polymerization-starting point of a cationically-polymerized polymer may approach to each other via hydrogen bond to generate crosslinked siloxane oligomers and consequently the adhesion of the ink layer may be degraded.

(Overcoat Layer)

As described above, the printed material according to the present invention may additionally include an overcoat layer on the ink layer.

The type of the overcoat paint for forming the overcoat layer is not particularly limited. Examples of the overcoat paint include organic solvent type paints, water-based paints, and powder paints. The type of the resin component used for the above-mentioned paints is not particularly limited. Examples of the resin component include acrylic resin-based components, polyester-based components, alkyd resin-based components, silicone-modified acrylic resin-based components, silicone-modified polyester-based components, silicone resin-based components, and fluororesin-based components. These resin components may be used alone or in combination. In addition, as necessary, the overcoat paint may be blended with crosslinking agents such as polyisocyanate compound, amino resin, epoxy group-containing compound, and carboxy group-containing compound.

2. Method of Manufacturing Printed Material

The method of manufacturing a printed material according to the present invention is not particularly limited. For example, an ink-receiving layer is formed by applying a resin composition to the surface of a base material, and by drying (or curing) the applied resin composition. Then, cationic actinic radiation-curable ink is ink-jet printed on the surface of the ink-receiving layer, and irradiated with actinic radiation for curing to form an ink layer. Further, an overcoat layer is formed as necessary by applying an overcoat paint to the surface of the ink layer, and by drying (or curing) the applied overcoat paint. The printed material according to the present invention can be manufactured with use of the above procedure. A chemical conversion film and an undercoating film may be formed on the surface of the base material before forming the ink-receiving layer. In addition, a metal plate on which an ink-receiving layer has been formed may be processed into a desired shape with an emboss roll.

When a chemical conversion film is to be formed on the surface of a base material, a chemical conversion film can be formed by applying a chemical conversion treatment solution onto the surface of the base material, and drying the chemical conversion treatment solution. The method of applying the chemical conversion treatment solution is not particularly limited, and may be appropriately selected from known methods. Examples of the application method include a roll coating method, a curtain flow method, a spin coating method, an air-spray method, an airless-spray method, and a dip-and-draw up method. The condition of drying chemical conversion treatment solution may be appropriately set in accordance with the chemical conversion treatment solution's composition and the like. For example, when a base material on which a chemical conversion treatment solution has been applied is put in a drying oven without washing with water, and is heated so that the final plate temperature falls within the range of 80 to 250°C, a uniform chemical conversion film can be formed on the surface of the base material. In addition, when an undercoating film is additionally formed, the undercoating film can be formed by applying an undercoating on the surface of a chemical conversion film, and by drying the undercoating. The method of applying the undercoating may be the same as that used for the chemical conversion treatment solution. The condition of drying the undercoating film may be appropriately set in accordance with the type of the resin or the like. For example, by applying heat so that the final plate temperature falls within the range of 150 to 250°C, a uniform undercoating film can be formed on the surface of the chemical conversion film.

The ink-receiving layer is formed by: applying and drying (or curing) the above-described resin composition on the surface of the base material (or the chemical conversion film or the undercoating film). The method of applying the resin composition is not particularly limited, and any of the known methods may be appropriately selected. Examples of the application method include a roll coating method, a curtain flow method, a spin coating method, an air-spray method, an airless-spray method, and a dip-and-draw up method. The condition of drying the resin composition is not particularly limited. For example, the ink-receiving layer can be formed on the surface of a base material (or chemical conversion film or undercoating film) by drying a base material on which a resin composition has been applied so that the final plate temperature falls within the range of 150 to 250°C.

Irregularity whose arithmetic average roughness Ra measured in accordance with JIS B 0601 falls within the range of 400 to 3,000 nm may be formed on the surface of the ink-receiving layer with use of nanoimprinting method, shot peening method or the like. Alternatively, irregularity may be formed on the surface of the ink-receiving layer by blending the above-described pigment whose particle diameter and amount to be blended are properly adjusted in the polyester resin composition for forming the matrix.

The ink layer can be formed by, after ink-jet printing the cationic actinic radiation-curable ink on the surface of the ink-receiving layer with use of an ink-jet printer, irradiating with actinic radiation (e.g., ultraviolet ray) so that the integrated amount of the light falls within the range of 100 to 800 mJ/cm$^2$ to cure the cationic actinic radiation-curable ink. For example, integrated amount of ultraviolet ray may be measured using an ultraviolet ray illuminometer/actinometer (UV-351-25; ORC Manufacturing Co., Ltd.), with a measurement wavelength range of 240 to 275 nm and a measurement wavelength center of 254 nm.

The overcoat layer is formed by applying the overcoat paint to the surface of the ink layer, and by drying (or curing) the applied overcoat paint. The method of applying the overcoat paint is not particularly limited, and any of the known methods may be appropriately selected. Examples of the application method include a roll coating method, a curtain flow method, a spin coating method, an air-spray method, an airless-spray method, a dip-and-draw up method and the like. The condition under which the overcoat paint is dried is not particularly limited. For example, by drying a printed material on which the overcoat paint has been applied so that the final plate temperature falls within the range of 60 to 150°C, the overcoat layer may be formed on the surface of the printed material.

As described above, the printed material according to the present invention is manufactured by using the cationic actinic radiation-curable ink containing predetermined amounts of the epoxy group-containing silane coupling agent and the hydroxyl group-containing oxetane compound. At this time, the epoxy group-containing silane coupling agent forms siloxane bonds with a cationically-polymerizable compound, a hydroxyl group-containing oxetane compound and the like to improve the weather resistance of the ink layer. In addition, the hydroxyl group-containing oxetane compound helps polymerization reaction proceed and inhibits the polymerization reaction within the cationically-polymerizable compound (silane coupling agent), and as a result improves the adhesion of the ink layer. Therefore, the printed material according to the present invention has weather resistance and is excellent in the adhesion of the ink layer to the ink-receiving layer.

In the following, the present invention will be described in detail with reference to Examples, which however shall not be construed as limiting the present invention.

Examples

1. Production of Printed Material

(1) Base Material

As an original sheet to be painted, a hot-dip Zn-55%Al alloy-plated steel sheet having a sheet thickness of 0.27 mm and a per-side plating deposition amount of 90 g/m$^2$ was prepared. Application-type chromate treatment liquid (NRC300NS; Nippon Paint Co., Ltd.) was applied on the surface of the original sheet which was alkali-degreased to form a chemical conversion film whose deposition amount in terms of total chromium is 50 mg/m$^2$. Next, polyester-based

primer paint (700P; Nippon paint Industrial Coatings Co., LTD.) was applied on the chemical conversion film with use of Bar-Coater, and then baked at final plate temperature of 215°C to form an undercoating film having a dry film thickness of 5 μm.

(2) Ink-receiving Layer

A. Preparation of Resin Compositions 1 to 7

Seven types of resin compositions for forming the ink-receiving layer were prepared with use of the following method. The resin compositions 1 to 7 were prepared by mixing polyester (number-average molecular weight 5,000, glass transition temperature 30°C, hydroxyl value 28 mgKOH/g; DIC Inc.) with methylated melamine resin (CYMEL 303; Mitsui Cytec Co., Ltd.) as crosslinking agent at a ratio of 70:30 to obtain a base resin, and by further blending catalyst, amine and pigment in the base resin. As the catalyst, dodecylbenzenesulfonic acid was added in an amount of 1 mass% with respect to the resin solid content. As the amine, dimethylaminoethanol was added in an amount of 1.25 times the acid equivalent of dodecylbenzenesulfonic acid, as the amine equivalent. As the pigment, titanium oxide (JR-603; TAYCA CORP.) having a mean particle diameter of 0.28 μm, hydrophobic silica A (Sylysia 456; Fuji Silysia Chemical Ltd.) having a mean particle diameter of 5.5 μm, hydrophobic silica B (Sylysia 476; Fuji Silysia Chemical Ltd.) having a mean particle diameter of 12 μm, mica (SJ-010; YAMAGUCHI MICA CO., LTD.) having a mean particle diameter of 10 μm and acrylic resin beads (TAFTIC AR650S; Toyobo Co., Ltd.) having a mean particle diameter of 18 μm were used (see Resin composition Nos. 1 to 7 in Table 1).

B. Preparation of Resin Compositions 8 to 10

Three types of resin compositions for forming the ink-receiving layer were prepared with use of the following method. The resin compositions 8 to 10 were prepared by mixing polyester (number-average molecular weight 5,000, glass transition temperature 30°C, hydroxyl value 28 mgKOH/g; DIC Inc.) with blocked isocyanate resin (Coronate 2513; Nippon Polyurethane Industry Co., Ltd.) as crosslinking agent at a ratio of 100:30 to obtain a base resin, and by further blending pigment in the base resin. The pigment used was the same as in the case of the resin compositions 1 to 7 (see Resin compositions Nos. 8 to 10 in Table 1).

C. Formation of Ink-receiving Layer

Each of the above-described resin compositions 1 to 10 was applied on the undercoating film with use of Bar-Coater, and then baked at a final plate temperature of 225°C for 1 minute to form an ink-receiving layer having a dry film thickness of 18 to 40 μm, and thus materials to be painted were manufactured (see Table 1). An experimental ink layer was formed on the ink-receiving layer and the cross section of the ink-receiving layer and the ink layer was observed with a microscope at a magnification of 100 to 200 times. As a result, an interface between the ink-receiving layer and the ink layer was clearly identified and thus the ink-receiving layer was confirmed to be impenetrable to the cationic actinic radiation-curable ink.

D. Measurement of Surface Roughness

With use of a stylus-type surface roughness meter gauge (Dektak150; ULVAC-PHI, Inc.), arithmetic average roughness Ra on the surface of the ink-receiving layer was measured in accordance with JIS B 0601. Measurement of arithmetic average roughness Ra was conducted by scanning for 60 seconds under a condition of a stylus pressure of 3 mg, a stylus radius of 2.5 μm, and a scan distance of 1 mm. It is to be noted that the stylus-type surface roughness meter gauge has a vertical resolution of 0.1 nm /6.5 μm, 1 nm /65.5 μm, and 8 nm /524 μm.
The material to be painted, the composition of the resin composition and the arithmetic average roughness Ra of the ink-receiving layer manufactured in each case are shown in Table 1.

[Table 1]

| Material to be painted No. | Resin composition No. | Base resin | Pigment | | | | | | | | Film Thickness (µm) | Surface roughness (µm) |
| | | | Titanium oxide (mass%) | Hydrophobic silica A (mass%) | Hydrophobic silica B (mass%) | Mica (mass%) | Beads | | Pigment weight concentration (%) | | | |
| | | | | | | | Mean particle diameter (µm) | Amount blended (mass%) | Total | Pigment having particle diameter of 4 µm or larger | | |
|---|---|---|---|---|---|---|---|---|---|---|---|---|
| 1 | 1 | polyester + melamine resin | 40 | 4 | 0 | 4 | 40 | 2 | 50 | 10 | 18 | 489 |
| 2 | 2 | | 49 | 6 | 0 | 13 | 40 | 2 | 70 | 21 | 18 | 1233 |
| 3 | 3 | | 56 | 6 | 2 | 7 | 40 | 4 | 75 | 19 | 18 | 1438 |
| 4 | 4 | | 43 | 6 | 2 | 7 | 18 | 4 | 62 | 19 | 10 | 1582 |
| 5 | 5 | | 43 | 6 | 2 | 7 | 80 | 4 | 62 | 19 | 40 | 2928 |
| 6 | 6 | | 40 | 0 | 3 | 7 | - | - | 50 | 10 | 18 | 391 |
| 7 | 7 | | 43 | 6 | 2 | 7 | 80 | 6 | 64 | 21 | 18 | 3051 |
| 8 | 8 | polyester + urethane resin | 40 | 4 | 0 | 4 | 40 | 2 | 50 | 10 | 18 | 411 |
| 9 | 9 | | 49 | 6 | 0 | 13 | 40 | 2 | 70 | 21 | 18 | 1169 |
| 10 | 10 | | 43 | 6 | 2 | 7 | 80 | 4 | 62 | 19 | 40 | 2878 |

(3) Ink Layer

A. Preparation of Cationic Actinic Radiation-curable Ink

A mixture of 10 mass% in total of epoxy compounds (CEL 2021P, CEL 3000; Daicel Corporation), 8.5 to 52.5 mass% in total of oxetane compounds (OXT-221, OXT-212; Toagosei Co., Ltd.) 0.2 to 11.0 mass% of epoxy group-containing silane coupling agent (KBM-403; Shin-Etsu Chemical Co., Ltd.), 8 to 52 mass% of hydroxyl group-containing oxetane compound (OXT-101; Toagosei Co., Ltd.), 3.0 parts by mass of black pigment (Channel Black RCF #33; Mitsubishi Chemical Corporation) and 3.5 mass% of pigment-dispersing agent (PB 822; Ajinomoto Fine-Techno Co., Inc.) was put in a glass bottle with 200 g of zirconia beads (diameter: 1 mm) and the glass bottle was hermetically sealed. Next, dispersion process was conducted using a paint shaker for four hours. After the dispersion process, the zirconia beads were removed to prepare a pigment dispersion. The pigment dispersion was mixed with 18 mass% of cationic photopolymerization initiator (CPI-100P; San-Apro Ltd.) to prepare cationic actinic radiation-curable ink (see Cationic actinic radiation-curable ink Nos. 1 to 10 in Table 2).

B. Ink-jet Printing

Ink-jet printing was conducted with use of an ink-jet head having a nozzle diameter of 35 $\mu$m. In addition, ink-jet printing was conducted under a condition of a head heating temperature of 45°C, an application voltage of 11.5 V, a pulse width of 10.0 $\mu$s, a drive frequency of 3,483 Hz, an ink drop volume of 42 pl, and a resolution of 360 dpi.

C. Irradiation of Ultraviolet Ray

To the material to be painted on which the ink-jet printing had been applied, ultraviolet ray was applied with use of a high-pressure mercury lamp (H valve; Fusion UV Systems Japan Inc.) so that the integrated amount of light was 600 mJ/cm$^2$ (measured with infrared ray actinometer UV-351-25; ORC Manufacturing Co., Ltd.) with a lamp output of 200 W/cm.

[Table 2]

| Cationic actinic radiation-curable ink No. | Epoxy compound | | Oxetane compound | | Epoxy-containing silane | | Hydroxyl group-containing oxetane compound (mass%) | Black pigment (mass%) | Pigment-dispersing agent (mass%) | Cationic photopolymerization initiator (mass%) |
|---|---|---|---|---|---|---|---|---|---|---|
| | Trade name | Amount blended (mass%) | Trade name | Amount blended (mass%) | Trade name | Amount blended (mass%) | | | | |
| 1 | CEL2021P | 10.0 | OXT-221 | 30.0 | KBM-403 | 0.5 | 25.0 | 3.0 | 3.5 | 18.0 |
| | | | OXT-212 | 10.0 | | | | | | |
| 2 | CEL2021P | 8.0 | OXT-221 | 30.0 | KBM-303 | 5.0 | 25.0 | 3.0 | 3.5 | 18.0 |
| | CEL3000 | 2.0 | OXT-212 | 5.5 | | | | | | |
| 3 | CEL2021P | 10.0 | OXT-221 | 30.0 | KBM-403 | 5.0 | 10.0 | 3.0 | 3.5 | 18.0 |
| | | | OXT-212 | 20.5 | | | | | | |
| 4 | CEL2021P | 10.0 | OXT-221 | 35.5 | KBM-403 | 5.0 | 25.0 | 3.0 | 3.5 | 18.0 |
| 5 | CEL2021P | 10.0 | OXT-221 | 14.5 | KBM-403 | 5.0 | 46.0 | 3.0 | 3.5 | 18.0 |
| 6 | CEL2021P | 10.0 | OXT-221 | 31.0 | KBM-403 | 9.5 | 25.0 | 3.0 | 3.5 | 18.0 |
| 7 | CEL2021P | 10.0 | OXT-221 | 30.0 | KBM-403 | 0.2 | 25.0 | 3.0 | 3.5 | 18.0 |
| | | | OXT-212 | 10.3 | | | | | | |
| 8 | CEL2021P | 10.0 | OXT-221 | 29.5 | KBM-403 | 11.0 | 25.0 | 3.0 | 3.5 | 18.0 |

(continued)

| Cationic actinic radiation-curable ink No. | Epoxy compound | | Oxetane compound | | Epoxy-containing silane | | Hydroxyl group-containing oxetane compound (mass%) | Black pigment (mass%) | Pigment-dispersing agent (mass%) | Cationic photopolymerization initiator (mass%) |
|---|---|---|---|---|---|---|---|---|---|---|
| | Trade name | Amount blended (mass%) | Trade name | Amount blended (mass%) | Trade name | Amount blended (mass%) | | | | |
| 9 | CEL2021P | 10.0 | OXT-221 OXT-212 | 30.0 22.5 | KBM-403 | 5.0 | 8.0 | 3.0 | 3.5 | 18.0 |
| 10 | CEL2021P | 10.0 | OXT-221 | 8.5 | KBM-403 | 5.0 | 52.0 | 3.0 | 3.5 | 18.0 |

CEL-2021P : 3',4'-epoxycyclohexylmethyl-3,4-epoxycyclohexane carboxylate
CEL-3000 : 1,2-epoxy-4-(2-methyloxiranyl)-1-methylcyclohexane
OXT-101 : 3-ethyl-3-hydroxymethyloxetane
OXT-221 : di[1-ethyl(3-oxetanyl)]methyl ether
OXT-212 : 2-ethylhexyloxetane
KBM-403 : 2-(3,4-epoxycyclohexyl)ethyltrimethoxysilane
KBM-404 : 3-glycidoxypropyltrimethoxysilane
CPI-100P : 50% propylene carbonate solution of diphenyl[4-(phenylthio)phenyl]sulfonium hexafluorophosphate

2. Evaluation of Ink Layer

(1) Evaluation on Adhesion

The cationic actinic radiation-curable ink was printed on the entire surface of the material to be painted so that the resolution was 360 dpi and the application amount of ink was 8.4 $g/m^2$ (amount that should be sufficient to form an ink layer without any gap). Then, a cross-cut adhesion test in accordance with JIS K 5600-5-6 G 330 was conducted on the printed material. To be more specific, cuts were formed through the surface of the printed material to provide a pattern of 100 identical squares at intervals of 1 mm, and an adhesive tape was attached to the part. After the tape was peeled off, the remaining rate of the coating film was confirmed. The rating was "A" when the peeled area of the coating film was 0%, the rating was "B" when the peeled area was greater than 0% and 10% or smaller, the rating was "C" when the peeled area was greater than 10% and 20% or smaller, and the rating was "D" when the peeled area was greater than 20%. Rating of "C" or higher for the adhesion of an ink layer indicates being practicable.

(2) Evaluation on Spreadability

A. Evaluation on Spreadability by Dot Diameter

One dot (resolution 360 dpi) of cationic actinic radiation-curable ink was printed on the surface of the material to be painted in 42 pl, and the dot diameter was measured with a microscope.

B. Evaluation on Spreadability by L* Value on Surface of Ink Layer

The cationic actinic radiation-curable ink was printed on the entire surface of the material to be painted so that the resolution was 360 dpi and the application amount of ink was 8.4 $g/m^2$ (amount that should be sufficient to form an ink layer without any gap). Then, L* value at a center portion of the printed material (ink layer) after the printing was measured in accordance with JIS K 5600. When cationic actinic radiation-curable ink spreads, the gap of the cationic actinic radiation-curable ink is eliminated and consequently the L* value is reduced. On the other hand, when spreading of the cationic actinic radiation-curable ink is insufficient, the ink-receiving layer is exposed and the L* value is increased. Therefore, the rating was "A" when the L* value is 25 or smaller, the rating was "B" when the L* value was greater than 25 and smaller than 30, the rating was "C" when the L* value was 30 or greater and smaller than 35, the rating was "D" when the L* value was 35 or greater and smaller than 40, and the rating was "E" when the L* value was 40 or greater. Rating of "C" or higher for the spreadability of cationic actinic radiation-curable ink indicates being practicable.

(3) Evaluation on Scratch Resistance

The scratch resistance of an ink layer was evaluated by pencil hardness when the ink layer on the surface of a printed material was scratched with a pencil in accordance with JIS K5600-5-4. A scratch hardness of H or higher was determined to be practicable.

(4) Evaluation on Weather Resistance

The weather resistance of an ink layer was evaluated by conducting a test with use of an ultra-accelerated weather resistance tester (KW-R5TP; DAYPLA WINTES CO., LTD.) under the following conditions and observing the surface appearance of the printed material after the test. The rating was "B" when the ink layer was not peeled off and the color difference ΔE between before and after the test was smaller than 5, the rating was "D" when the ink layer was not peeled off and the color difference ΔE between before and after the test was 5 or greater, and the rating was "E" when the ink layer was peeled off. Appearance rating of "B" indicates being practicable.

"Test conditions"

- test time: 600 hours
- UV cut filter: KF-1
- temperature of black panel: 63°C
- irradiation strength of UV: 750 $W/m^2$
- rainfall (spraying with pure water) condition: 2 min/120 min

- continuous UV irradiation (without dew condensation and darkness setting)

[Table 3]

| Section | Material to be painted No. | Actinic radiation-curable ink No. | Adhesion | Weather resistance | Spreadability | | Pencil hardness |
|---|---|---|---|---|---|---|---|
| | | | | | Dot diameter | L* value | |
| Ex.1 | 1 | 1 | A | B | 105 | B | 2H |
| Ex.2 | 2 | | A | B | 174 | A | 2H |
| Ex.3 | 3 | | A | B | 182 | A | 2H |
| Ex.4 | 4 | | A | B | 198 | A | 2H |
| Ex.5 | 5 | | A | B | 207 | B | 2H |
| Ex.6 | 6 | | B | B | 78 | D | 2H |
| Ex.7 | 7 | | A | B | 208 | C | 2H |
| Ex.8 | 8 | | A | B | 101 | B | 2H |
| Ex.9 | 9 | | A | B | 169 | A | 2H |
| Ex.10 | 10 | | A | B | 198 | A | 2H |
| Ex.11 | 1 | 2 | A | B | 106 | B | 2H |
| Ex.12 | 2 | | A | B | 178 | A | 2H |
| Ex.13 | 3 | | A | B | 183 | A | 2H |
| Ex.14 | 4 | | A | B | 197 | A | 2H |
| Ex.15 | 5 | | A | B | 206 | B | 2H |
| Ex.16 | 6 | | B | B | 74 | D | 2H |
| Ex.17 | 7 | | A | B | 207 | C | 2H |
| Ex.18 | 8 | | A | B | 102 | B | 2H |
| Ex.19 | 9 | | A | B | 170 | A | 2H |
| Ex.20 | 10 | | A | B | 199 | A | 2H |
| Ex.21 | 1 | 3 | B | B | 96 | B | 3H |
| Ex.22 | 2 | | B | B | 110 | B | 3H |
| Ex.23 | 3 | | B | B | 117 | B | 3H |
| Ex.24 | 4 | | B | B | 121 | B | 3H |
| Ex.25 | 5 | | B | B | 128 | B | 3H |
| Ex.26 | 6 | | B | B | 66 | D | 3H |
| Ex.27 | 7 | | B | B | 129 | C | 3H |
| Ex.28 | 8 | | B | B | 97 | B | 3H |
| Ex.29 | 9 | | B | B | 112 | B | 3H |
| Ex.30 | 10 | | B | B | 124 | B | 3H |

(continued)

| Section | Material to be painted No. | Actinic radiation-curable ink No. | Adhesion | Weather resistance | Spreadability | | Pencil hardness |
| --- | --- | --- | --- | --- | --- | --- | --- |
| | | | | | Dot diameter | L* value | |
| Ex.31 | 1 | 4 | A | B | 104 | B | 2H |
| Ex.32 | 2 | | A | B | 176 | A | 2H |
| Ex.33 | 3 | | A | B | 184 | A | 2H |
| Ex.34 | 4 | | A | B | 195 | A | 2H |
| Ex.35 | 5 | | A | B | 210 | B | 2H |
| Ex.36 | 6 | | C | B | 74 | D | 2H |
| Ex.37 | 7 | | A | B | 211 | C | 2H |
| Ex.38 | 8 | | A | B | 101 | B | 2H |
| Ex.39 | 9 | | A | B | 168 | A | 2H |
| Ex.40 | 10 | | A | B | 197 | A | 2H |

[Table 4]

| Section | Material to be painted No. | Actinic radiation-curable ink No. | Adhesion | Weather resistance | Spreadability | | Pencil hardness |
| --- | --- | --- | --- | --- | --- | --- | --- |
| | | | | | Dot diameter | L* value | |
| Ex.41 | 1 | 5 | A | B | 119 | B | H |
| Ex.42 | 2 | | A | B | 183 | A | H |
| Ex.43 | 3 | | A | B | 192 | A | H |
| Ex.44 | 4 | | A | B | 201 | A | H |
| Ex.45 | 5 | | A | B | 211 | B | H |
| Ex.46 | 6 | | B | B | 84 | D | H |
| Ex.47 | 7 | | A | B | 213 | C | H |
| Ex.48 | 8 | | A | B | 117 | B | H |
| Ex.49 | 9 | | A | B | 184 | A | H |
| Ex.50 | 10 | | A | B | 207 | A | H |
| Ex.51 | 1 | 6 | B | B | 100 | B | 3H |
| Ex.52 | 2 | | B | B | 169 | A | 3H |
| Ex.53 | 3 | | B | B | 178 | A | 3H |
| Ex.54 | 4 | | B | B | 184 | A | 3H |
| Ex.55 | 5 | | B | B | 193 | B | 3H |
| Ex.56 | 6 | | B | B | 70 | D | 3H |
| Ex.57 | 7 | | B | B | 195 | C | 3H |
| Ex.58 | 8 | | B | B | 99 | B | 3H |
| Ex.59 | 9 | | B | B | 163 | A | 3H |
| Ex.60 | 10 | | B | B | 192 | A | 3H |

[Table 5]

| Section | Material to be painted No. | Actinic radiation-curable ink No. | Adhesion | Weather resistance | Spreadability | | Pencil hardness |
|---|---|---|---|---|---|---|---|
| | | | | | Dot diameter | L* value | |
| Comp. Ex. 1 | 1 | 7 | A | D | 104 | A | H |
| Comp. Ex.2 | 2 | | A | D | 175 | A | H |
| Comp. Ex.3 | 3 | | A | D | 184 | A | H |
| Comp. Ex.4 | 4 | | A | D | 191 | A | H |
| Comp. Ex.5 | 5 | | A | D | 206 | A | H |
| Comp. Ex.6 | 6 | | B | E | 79 | D | H |
| Comp. Ex.7 | 7 | | A | D | 208 | C | H |
| Comp. Ex.8 | 8 | | A | D | 102 | A | H |
| Comp. Ex.9 | 9 | | A | D | 172 | A | H |
| Comp. Ex.10 | 10 | | A | D | 200 | A | H |
| Comp. Ex.11 | 1 | 8 | D | B | 99 | B | 3H |
| Comp. Ex.12 | 2 | | D | B | 166 | B | 3H |
| Comp. Ex.13 | 3 | | D | B | 174 | B | 3H |
| Comp. Ex.14 | 4 | | D | B | 180 | B | 3H |
| Comp. Ex.15 | 5 | | D | B | 189 | B | 3H |
| Comp. Ex.16 | 6 | | D | B | 68 | D | 3H |
| Comp. Ex.17 | 7 | | D | B | 190 | C | 3H |
| Comp. Ex.18 | 8 | | D | B | 98 | B | 3H |
| Comp. Ex.19 | 9 | | D | B | 157 | B | 3H |
| Comp. Ex.20 | 10 | | D | B | 188 | B | 3H |

(continued)

| Section | Material to be painted No. | Actinic radiation-curable ink No. | Adhesion | Weather resistance | Spreadability | | Pencil hardness |
|---|---|---|---|---|---|---|---|
| | | | | | Dot diameter | L* value | |
| Comp. Ex.21 | 1 | 9 | D | B | 80 | B | 2H |
| Comp. Ex.22 | 2 | | D | B | 104 | B | 2H |
| Comp. Ex.23 | 3 | | D | B | 110 | B | 2H |
| Comp. Ex.24 | 4 | | D | B | 116 | B | 2H |
| Comp. Ex.25 | 5 | | D | B | 128 | B | 2H |
| Comp. Ex.26 | 6 | | D | B | 59 | E | 2H |
| Comp. Ex.27 | 7 | | D | B | 130 | C | 2H |
| Comp. Ex.28 | 8 | | D | B | 83 | B | 2H |
| Comp. Ex.29 | 9 | | D | B | 105 | B | 2H |
| Comp. Ex.30 | 10 | | D | B | 118 | A | 2H |
| Comp. Ex.31 | 1 | 10 | A | B | 126 | A | 2B |
| Comp. Ex.32 | 2 | | A | B | 194 | A | 2B |
| Comp. Ex.33 | 3 | | A | B | 200 | A | 2B |
| Comp. Ex.34 | 4 | | A | B | 211 | A | 2B |
| Comp. Ex.35 | 5 | | A | B | 218 | D | 2B |
| Comp. Ex.36 | 6 | | B | B | 90 | C | 2B |
| Comp. Ex.37 | 7 | | A | B | 220 | A | 2B |
| Comp. Ex.38 | 8 | | A | B | 128 | A | 2B |
| Comp. Ex.39 | 9 | | A | B | 191 | A | 2B |
| Comp. Ex.40 | 10 | | A | B | 215 | A | 2B |

(5) Results

As shown in Table 5, the printed materials in Comparative Examples 1 to 10, in which the cationic actinic radiation-curable ink No. 7 with the epoxy group-containing silane coupling agent added in an amount of smaller than 0.5 mass% was used, exhibited low weather resistance. In addition, the printed materials had a color difference ΔE between before and after the test of 5 or greater. The printed materials in Comparative Examples 11 to 20, in which the cationic actinic radiation-curable ink No. 8 with the epoxy group-containing silane coupling agent added in an amount of as great as 11 mass% was used, exhibited low adhesion due to the cure shrinkage of the ink layer. The printed materials in Comparative Examples 21 to 30, in which the cationic actinic radiation-curable ink No. 9 with the hydroxyl group-containing oxetane compound added in a small amount was used, also exhibited low adhesion. The printed materials in Comparative Examples 31 to 40, in which the cationic actinic radiation-curable ink No. 10 with the hydroxyl group-containing oxetane compound added in an amount of as great as 52.0 mass% was used, exhibited low scratch resistance. The reason was presumed that the oxetane compound tends to incorporate moisture in the air.

On the other hand, the printed materials in which one of the materials to be painted Nos. 1 to 5 and 8 to 10 and one of the cationic actinic radiation-curable inks Nos. 1 to 6 were used exhibited a one-dot diameter of 96 μm or larger, which exhibited sufficient spreadability, as shown in Tables 3 and 4. In addition, these printed materials exhibited a favorable L* value of lower than 30 because of no gaps between the dots, and the adhesion of the cationic actinic radiation-curable ink was also favorable. In particular, in the printed materials in which one of the materials to be painted Nos. 2 to 4 and one of the cationic actinic radiation-curable ink Nos. 1, 2 and 4 to 6 were used, the L* value was lower than 25 due to the Ra being 500 to 2,000 nm, and the printed materials exhibited excellent color development.

On the other hand, in the printed materials in which the material to be painted No. 6 and one of the cationic actinic radiation-curable inks Nos. 1 to 6 were used, the Ra was smaller than 400 nm and the dot diameter was 80 μm or smaller. It is considered that the L* value of each of these printed materials was as high as 35 or greater because, in these printed materials, each dot was independent and the ink-receiving layer as the foundation was exposed. However, these printed materials were favorable in adhesion and weather resistance because the predetermined amounts of the epoxy group-containing silane coupling agent and the hydroxyl group-containing oxetane compound were blended in the cationic actinic radiation-curable ink used in each of these printed materials. In the printed materials in which the material to be painted No. 7 and one of the cationic actinic radiation-curable inks Nos. 1 to 6 were used, the Ra was greater than 3,000 nm and the L* value was 30 or greater. The reason was presumed that the cationic actinic radiation-curable ink intruded into the deep grooves on the surface of the ink-receiving layer and thus color was weakened. Also in this case, these printed materials were favorable in adhesion and weather resistance because the predetermined amounts of the epoxy group-containing silane coupling agent and the hydroxyl group-containing oxetane compound were blended in the cationic actinic radiation-curable ink used in each of these printed materials. The printed materials in which one of the materials to be painted Nos. 1 to 10 and one of the cationic actinic radiation-curable inks Nos. 1 to 6 were used exhibited a pencil hardness of H or higher and were favorable in scratch resistance.

Industrial Applicability

The printed material according to the present invention has weather resistance and scratch resistance and is excellent in the adhesion of the ink layer to the ink-receiving layer, and is therefore suitable for an interior material and an exterior wall material of a building.

**Claims**

1. A printed material comprising:

   a base material being a metallic base material or a ceramic base material;
   an ink-receiving layer disposed on the base material and formed of a cured product of a resin composition; and
   an ink layer disposed on the ink-receiving layer and formed of a cured product of a cationic actinic radiation-curable ink, wherein:

   the cationic actinic radiation-curable ink contains a cationically-polymerizable compound, an epoxy group-containing silane coupling agent, a hydroxyl group-containing oxetane compound and a photopolymerization initiator,
   a content of the epoxy group-containing silane coupling agent in the cationic actinic radiation-curable ink is in a range of 0.5 to 10.0 mass%, and
   a content of the hydroxyl group-containing oxetane compound in the cationic actinic radiation-curable ink is in a range of 10 to 50 mass%.

2. The printed material according to claim 1, wherein the ink-receiving layer is impenetrable to the cationic actinic radiation-curable ink.

3. The printed material according to claim 1 or 2, wherein a surface of the ink-receiving layer has an arithmetic average roughness Ra in a range of 400 to 3,000 nm as measured in accordance with JIS B 0601.

4. The printed material according to any one of claims 1 to 3, wherein the resin composition contains a polyester and a melamine resin, or contains a polyester and a urethane resin, or contains a polyester, a melamine resin and a urethane resin.

5. The printed material according to any one of claims 1 to 4, wherein the hydroxyl group-containing oxetane compound is 3-ethyl-3-hydroxymethyloxetane.

**Patentansprüche**

1. Bedrucktes Material, umfassend:

ein Basismaterial, welches ein metallisches Basismaterial oder ein Keramikbasismaterial ist;
eine Tintenaufnahmeschicht, die auf dem Basismaterial angeordnet ist und aus einem gehärteten Produkt einer Harzzusammensetzung gebildet ist; und
eine Tintenschicht, die auf der Tintenaufnahmeschicht angeordnet ist und aus einem gehärteten Produkt einer kationischen, durch aktinische Strahlung härtbaren Tinte gebildet ist, wobei:

die kationische, durch aktinische Strahlung härtbare Tinte eine kationisch polymerisierbare Verbindung, ein Epoxygruppe enthaltendes Silankupplungsmittel, eine Hydroxylgruppe enthaltende Oxetanverbindung und einen Photopolymerisationsinitiator enthält,
ein Gehalt des Epoxygruppe enthaltenden Silankupplungsmittels in der kationischen, durch aktinische Strahlung härtbaren Tinte in einem Bereich von 0,5 bis 10,0 Massen% liegt, und
ein Gehalt der Hydroxylgruppe enthaltenden Oxetanverbindung in der kationischen, durch aktinische Strahlung härtbaren Tinte in einem Bereich von 10 bis 50 Massen% liegt.

2. Bedrucktes Material nach Anspruch 1, wobei die Tintenaufnahmeschicht für die kationische, durch aktinische Strahlung härtbare Tinte undurchdringbar ist.

3. Bedrucktes Material nach Anspruch 1 oder 2, wobei eine Oberfläche der Tintenaufnahmeschicht eine arithmetische durchschnittliche Rauheit Ra in einem Bereich von 400 bis 3000 nm aufweist, gemessen gemäß JIS B 0601.

4. Bedrucktes Material nach einem der Ansprüche 1 bis 3, wobei die Harzzusammensetzung einen Polyester und ein Melaminharz enthält, oder einen Polyester und ein Urethanharz enthält, oder einen Polyester, ein Melaminharz und ein Urethanharz enthält.

5. Bedrucktes Material nach einem der Ansprüche 1 bis 4, wobei die Hydroxylgruppe enthaltende Oxetanverbindung 3-Ethyl-3-hydroxymethyloxetan ist.

**Revendications**

1. Matériau imprimé comprenant :

un matériau de base qui est un matériau de base métallique ou un matériau de base céramique ;
une couche de réception d'encre disposée sur le matériau de base et formée d'un produit durci d'une composition de résine ; et
une couche d'encre disposée sur la couche de réception d'encre et formée d'un produit durci d'une encre cationique durcissable par rayonnement actinique, dans lequel :

l'encre cationique durcissable par rayonnement actinique contient un composé polymérisable par voie cationique, un agent de couplage au silane contenant un groupe époxy, un composé oxétane contenant un groupe hydroxyle et un initiateur de photopolymérisation,

une teneur de l'agent de couplage au silane contenant un groupe époxy dans l'encre cationique durcissable par rayonnement actinique est dans une plage de 0,5 à 10,0 % en masse, et

une teneur du composé oxétane contenant un groupe hydroxyle dans l'encre cationique durcissable par rayonnement actinique est dans une plage de 10 à 50 % en masse.

2.  Matériau imprimé selon la revendication 1, dans lequel la couche de réception d'encre est impénétrable par l'encre cationique durcissable par rayonnement actinique.

3.  Matériau imprimé selon la revendication 1 ou 2, dans lequel une surface de la couche de réception d'encre a une rugosité moyenne arithmétique Ra dans une plage de 400 à 3 000 nm telle que mesurée conformément à JIS B 0601.

4.  Matériau imprimé selon l'une quelconque des revendications 1 à 3, dans lequel la composition de résine contient un polyester et une résine de mélamine, ou contient un polyester et une résine d'uréthane, ou contient un polyester, une résine de mélamine et une résine d'uréthane.

5.  Matériau imprimé selon l'une quelconque des revendications 1 à 4, dans lequel le composé oxétane contenant un groupe hydroxyle est le 3-éthyl-3-hydroxyméthyloxétane.

PIGMENT OF 4 $\mu$m OR LARGER  PIGMENT OF SMALLER THAN 1 $\mu$m

MATRIX RESIN

BASE MATERIAL

FIG. 1

SILANE COUPLING AGENT AFTER HYDROLYSIS

ACID CATALYST

CONDENSATION REACTION

+ $H_2O$

CROSSLINKED SILOXANE OLIGOMER

FIG. 2

EP 3 085 546 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011153255 A
- JP 2007002130 A
- JP 2012025125 A
- WO 2008045480 A
- JP 2001220526 A
- JP 2001310937 A